# EUROPÄISCHE PATENTSCHRIFT

(11) **EP 1 153 539 B1**
(45) Veröffentlichungstag und Bekanntmachung des Hinweises auf die Patenterteilung: **13.02.2008**
(21) Anmeldenummer: 01110527.7
(22) Anmeldetag: 28.04.2001
(51) Int. Cl.: A01F 15/10, A01D 90/04

(54) **Fördervorrichtung für eine Rundballenpresse**
Feeding device for a rotobaler
Dispositif d'alimentation pour une presse à balles rondes

(30) Priorität: 12.05.2000 DE 10023443
(43) Veröffentlichungstag der Anmeldung: 14.11.2001
(73) Patentinhaber: DEERE & COMPANY, Moline, Illinois 61265-8098 (US)
(72) Erfinder: Viaud, Jean, 70100 Gray (FR); Josset, Etienne, 70100 Gray (FR); Lucand, Philippe, 70120 Melin (FR)
(74) Vertreter: Magin, Ludwig Bernhard

(56) Entgegenhaltungen:
- EP-A- 0 074 533
- EP-A- 0 815 720
- WO-A-92/09191
- DE-A- 4 102 034
- DE-A- 4 201 545
- DE-A- 19 841 598
- DE-C- 4 219 719
- US-A- 5 450 704
- US-A- 5 819 517

## Beschreibung

Die Erfindung betrifft eine Fördervorrichtung einer Erntebergungsmaschine mit einem Rotor, wenigstens einem Abstreifer und einem wenigstens eine Leitwand enthaltenden Förderkanal.

Die DE-C1-42 19 719 offenbart eine Großballenpresse mit einem Förderkanal, durch den Erntegut von einem Raffermechanismus von einer Pick-up zu einem Preßkanal gefördert wird. Der Förderkanal weist eine Leitwand auf, die aus in der Gutflußrichtung verlaufenden Stegen und zwischen diesen befindlichen Leitblechen gebildet wird. Die Leitbleche können sich gegen die Kraft von Federn bewegen, um Lastspitzen zu vermeiden.

Aus der DE-C2-195 46 263 geht eine Fördervorrichtung einer Rundballenpresse hervor, wobei der Förderkanal eine untere Leitwand enthält, die um ein stromabwärts gelegenes Lager quer zur Gutflußrichtung schwenkbar ist. Eine Bewegung der Leitwand und somit eine Öffnung des Eintrittsspalts findet ab einem bestimmten Druck des Erntegutes statt.

Gemäß der DE-C1-198 21 591 ist der Boden einer Förderstrecke zwischen einer Pick-up und der Preßkammer an einem stromaufwärts gelegenen Ende in einem Schwenklager gehalten und an einem stromabwärts gelegenen Endbereich quer zum Gutfluß verstellbar. Die Verstellung erfolgt mittels eines Motors und dient dazu, Verstopfungen in dem Förderkanal zu beseitigen.

In ähnlicher Weise kann eine Leitwand einer Fördervorrichtung eines Ladewagens nach der EP-A1-0 074 533 mittels eines Hebels verstellt werden, um Verstopfungen zu beseitigen.

Damit der Zufuhrkanal einer landwirtschaftlichen Großballenpresse von Verstopfungen befreit werden kann, ist der DE-A1-0 339 733 zufolge eine schwenkbare Wand vorgesehen, mittels der der Förderkanal geöffnet werden kann.

Gemäß der DE-A1-198 41 598 ist eine Rundballenpresse mit einem Schneidwerk versehen, das einen Rotor besitzt, dem gegenüber durch eine Wand ragende Messer vorgesehen sind, die in einen Förderkanal hineinragen. Die Wand kann stromaufwärts des Rotors quer zum Gutstrom verstellt werden und somit den Kanalquerschnitt verändern. Am stromabwärts gelegenen Ende kann die Wand nach unten geklappt werden, damit Fremdkörper aus dem Kanal entnommen werden können. Das Erntegut wird von einem feststehenden Abstreifer am Ernteguteinlaß vom Rotor abgenommen. Die Verstellung der Wand erfolgt in Abhängigkeit von einem an dem Rotor abgenommenen Drehmoment.

Aus der DE 42 01 545 geht eine Fördervorrichtung mit einer Leitwand hervor, die stromaufwärts, wie auch stromabwärts eines Förderrotors ausweichen kann, um Raum für zuviel gefördertes Gut zu schaffen. Auf den Förderrotor setzen sich zudem schwenkbare Abstreifer auf, die mittels Federkraft stets an diesem in Anlage gehalten werden, damit kein Fördergut zwischen sie und den Förderrotor gelangen kann. Bei dieser Vorrichtung kann ausgerechnet im kritischen Bereich, d.h. dort, wo der Umfangskreis des Förderrotors der Leitwand am nächsten kommt, letztere nicht oder nur ganz minimal ausweichen.

Das der Erfindung zugrunde liegende Problem wird darin gesehen, daß die bekannten Maßnahmen nur auf die Beseitigung von Verstopfungen oder Lastspitzen gerichtet sind, anstatt auf deren Vermeidung, oder eine nicht unwesentliche Verstellung der Leitwand erfordern.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ist eine Anpassung des Förderkanalquerschnitts an die Gutmenge in der Weise möglich, daß stets eine gewünschte Gutdichte vorliegt. Demnach kann der Förderkanal nicht nur erweitert, sondern auch verengt werden und somit sicherstellen, daß das Gut transportiert wird, anstatt sich zu einem Berg anzusammeln und dann eine Überlast zu provozieren. Desgleichen kann dann, wenn eine große Gutmenge anfällt, der Querschnitt eine Größe annehmen, die Verstopfungen vermeidet. Die Querschnittsveränderung erfolgt auch aufgrund der Stellung des oder der Abstreifer. Zusätzlich kann auch die Leitwand verstellt werden. Die Stellung des Abstreifers kann sowohl manuell als auch automatisch über die Einstellvorrichtung verändert werden. Eine Verstellung des Abstreifers und gegebenenfalls einer verstellbaren Leitwand kann grundsätzlich stufenweise und mittels Hebeln und dergleichen erfolgen.

Die Fremdkraftbetätigung kann mittels Hydraulik- oder Elektromotoren direkt oder über Hebel, Lenker, Seile oder dergleichen und bequem von einer Fahrerkabine aus erfolgen.

In einfachen überschaubaren Fällen reicht es aus, die Anpassung manuell vorzunehmen, z. B. mittels Schrauben, Bolzen, Löchern, Spindeln, oder dergleichen.

Das Maß der Anpassung an die Gutstärke kann sowohl von einem Fahrer vorgegeben als auch von einem Sensor ermittelt werden. Der Sensor kann verschiedenartige Signale aufnehmen, z. B. die Belastung einer stromaufwärts gelegenen Fördereinheit, oder die mittels Ultraschall oder dergleichen ermittelte Erntegutdichte, die Höhe der Erntegutmatte, oder dergleichen.

Da die Erntegutmenge, also deren Volumen, ein relativ zuverlässiges Maß für die zu erwartende Belastung ist, insbesondere wenn dessen spezifische Eigenschaften, wie Masse, Festigkeit und dergl. mit einbezogen werden, ist sie hervorragend als Grundlage für die Ermittlung eines Stellwerts geeignet.

Eine automatische Steuerung oder Regelung, die auf die Verhältnisse der unterschiedlichsten Erntegüter und Ernteumstände, z. B. Feuchte, Verschmutzung und dergl. reagieren kann, ist dadurch zu bewerkstelligen, daß entsprechende Daten bei Versuchen ermittelt und in einem Speicher zusammengefaßt werden, der zur Ermittlung des Förderkanalquerschnitts herangezogen wird.

Die Befestigung der Messer auf der Leitwand hat den Vorteil, daß bei einer abnehmenden Erntegutmenge die Messer bei einer Verstellung der Leitwand mitgenommen werden und in den Spalt für den Gutdurchgang weiter eindringen. Sie stellen somit sicher, daß Erntegut nicht ungeschnitten, z. B. zu der Presse gelangt.

Ist es nicht erforderlich, daß stets eine bestimmte Menge an Erntegut geschnitten wird oder soll nur eine bestimmte Leistung für den Schnitt des Ernteguts zur Verfügung gestellt werden, reicht es aus, nur die Leitwand zu verstellen, um eine homogene Förderung zu erreichen, während die Messer ortsfest verharren und durch die Leitwand hindurch ragen.

Um eine ständige Regelung oder Steuerung zu vermeiden, bzw. auf nicht vorhersehbare Lastspitzen reagieren zu können, z. B. beim Eintreten eines Fremdkörpers, ist ein Kraftspeicher, z.B. eine Feder oder ein Gasdruckspeicher, vorgesehen, der eine Veränderung des Förderkanalquerschnitts auch dann erlaubt, wenn die Einstellvorrichtung nicht reagiert bzw. aktiviert wird.

Der Durchlaßquerschnitt wird dadurch automatisch verändert, daß die Abstreifer mehr oder weniger weit in den Förderkanal hinein bzw. heraus bewegt werden. Bei dieser Ausführung können die Abmessungen des Förderkanals unverändert bleiben. Eine schnelle und genaue Anpassung erfolgt über einen stufenlosen Hydraulikmotor, der z. B. mittels der Einstellvorrichtung aktiviert wird.

Um eine gleichmäßige Veränderung des Kanalquerschnitts zu erreichen, ohne dem Erntegut Kanten, Absätze oder dergleichen zu bieten, an denen es sich verfangen könnte, sind die Abstreifer mit einer Abstreifkante versehen, die sich kontinuierlich zu der Leitwand hin- bzw. von dieser wegbewegt. Der jeweilige Abstand ergibt sich durch die Verstellung des Abstreifers in die entsprechende Lage bzw. Richtung.

Eine besonders widerstandsarme Form der Abstreifkante mit zunehmender Progressivität ist durch den Verlauf einer Evolvente gegeben, die um den Mittelpunkt des Rotors verlagert werden kann.

Um die auf die Abstreifer wirkenden Kräfte abstützen zu können und um zu vermeiden, daß sich Erntegut zwischen den Rotor und die Abstreifer einklemmt, werden die Abstreifer auf der Außenumfangsfläche des Rotors oder mit geringem Abstand zu diesem angeordnet und können diesem gegenüber gleiten.

Zusätzlich zu dem Abstreifer, kann auch die Leitwand selbst verstellt werden. Im Gegensatz zu dem Stand der Technik bleibt der Querschnitt im Zuführbereich unverändert. Ein weiterer Unterschied zum Stand der Technik liegt in der kontrollierten Verstellung des stromabwärts gelegenen Endes in beiden Richtungen während des Förderbetriebs.

Eine Verstellung stromabwärts des Rotors bei einem ortsfesten Schwenklager stromaufwärts von ihm, führt einerseits zu einer Veränderung des Zufuhrspalts im Umfangsbereich des Rotors, während andererseits die Verstellung der Leitwand stromabwärts des Rotors keine Rolle mehr spielt, da es dort nicht oder kaum zu Gutflußproblemen kommt.

Nach einer anderen Art, die erfinderische Lehre zu verfeinern, wird die Leitwand an dem Eingangsbereich gesteuert bewegt und ändert somit den Eingangsspalt.

Um eine sichere Verstellung der Leitwand zu erreichen, ist eine Gleitführung vorgesehen, in der ein Gleitlager am stromaufwärts gelegenen Ende der Leitwand quer zu dem Gutfluß bewegt werden kann.

Das Erntegut kann während der Förderung aufgelockert werden, wenn der Rotor oberschlächtig arbeitet, wobei der Querschnitt des Förderkanals von einer oberhalb des Rotors gelegenen Leitwand oder mittels oberhalb von dieser angeordneter Abstreifer beeinflußbar ist.

Wenn eine Zufuhr des Ernteguts vertikal in den Preß- oder Gutraum nach oben erforderlich ist, kann dies dadurch erreicht werden, daß der Rotor unterschlächtig fördert und sich die gegebenenfalls verstellbare Leitwand unter ihm befindet.

Eine weitere Möglichkeit, den Förderquerschnitt zu verändern, besteht darin, daß der Förderkanal als solcher unverändert bleibt, während der Rotor in ihm quer zu der Gutflußrichtung verstellt wird und den Durchtrittsspalt verändert. Dies kann sowohl bei einem oberschlächtig als auch bei einem unterschlächtig arbeitenden Rotor erfolgen.

Sowohl der Fertigungs- wie auch der Verstellaufwand wird dadurch geringer gehalten, daß eine oder wenige Einstellvorrichtungen vorgesehen sind, die auf mehrere Stellelemente wirken, z. B. auf den Abstreifer und die Leitwand oder auf den Abstreifer und den Rotor oder auf den Rotor und die Leitwand.

Zur Entlastung der Einstellvorrichtung und als Sicherheitsmerkmal sind Anschläge vorgesehen, die den Weg der Abstreifer und/oder der Leitwand begrenzen.

Um eine symmetrische Verstellung der Leitwand mit Bezug auf den Rotor zu erreichen, wird die Leitwand an beiden Enden verstellt, so daß sie konzentrisch zu dem Rotor verläuft.

Insbesondere dann, wenn dem Rotor zum Bilden einer Schneidvorrichtung Messer zugeordnet sind, kann es Ernteumstände geben, unter denen die Wirkung der Schneidvorrichtung nicht gewünscht ist. Um schnell vom Schneide- auf den Nicht-Schneidebetrieb umzustellen, ist vorgesehen, daß sowohl die Abstreifer als auch die Leitwand gemeinsam und evtl. gleichzeitig aus dem Förderkanal zurückgezogen bzw. in diesen eingefügt werden können.

Die Herstellungskosten werden geringer gehalten, wenn anstatt einer doppeltwirkenden hydraulischen Einstellvorrichtung und entsprechender Ventile für die Stellbewegung in der einen Richtung ein Energiespeicher, z. B. eine Feder, benutzt wird.

Um mehreren Anforderungen Rechnung tragen zu können, kann neben einer gezielten und kontrollierten Verstellung z. B. der Leitwand durch die Einstellvorrichtung auch eine unkontrollierte Verstellung durch eine Feder oder dergleichen, z. B. an dem Rotor vorgesehen werden.

Die Verwendung der erfindungsgemäßen Fördervorrichtung an einer Ballenpresse ist besonders vorteilhaft, weil an einer Ballenpresse hohe Volumendurchsätze zu bewältigen sind, ohne daß es zu nennenswerten Störungen kommen darf.

In der Zeichnung sind mehrere nachfolgend näher beschriebene Ausführungsbeispiele der Erfindung in Seitenansicht und in Verbindung mit einer Rundballenpresse dargestellt. Es zeigt:
- Fig. 1: eine Fördervorrichtung nach einer ersten Ausführungsform,
- Fig. 2: eine Fördervorrichtung nach einer zweiten Ausführungsform,
- Fig. 3: eine Fördervorrichtung nach einer dritten Ausführungsform,
- Fig. 4: eine Fördervorrichtung nach einer vierten Ausführungsform,
- Fig. 5: eine Fördervorrichtung nach einer fünften Ausführungsform,
- Fig. 6: eine Fördervorrichtung nach einer sechsten Ausführungsform,
- Fig. 7: die Fördervorrichtung nach Figur 6 in einer anderen Stellung,
- Fig. 8: eine Fördervorrichtung nach einer siebten Ausführungsform,
- Fig. 9: eine Fördervorrichtung nach einer achten Ausführungsform,
- Fig. 10: eine Fördervorrichtung nach einer neunten Ausführungsform,
- Fig. 11: eine Fördervorrichtung nach einer zehnten Ausführungsform,
- Fig. 12: eine Fördervorrichtung nach einer elften Ausführungsform,
- Fig. 13: eine Fördervorrichtung nach einer zwölften Ausführungsform,
- Fig. 14: eine Fördervorrichtung nach einer dreizehnten Ausführungsform,
- Fig. 15: eine Fördervorrichtung nach einer vierzehnten Ausführungsform,
- Fig. 16: eine Fördervorrichtung nach einer fünfzehnten Ausführungsform,
- Fig. 17: eine Fördervorrichtung nach einer sechszehnten Ausführungsform,
- Fig. 18: eine Fördervorrichtung nach einer siebzehnten Ausführungsform und
- Fig. 19: eine Fördervorrichtung nach einer achtzehnten Ausführungsform und

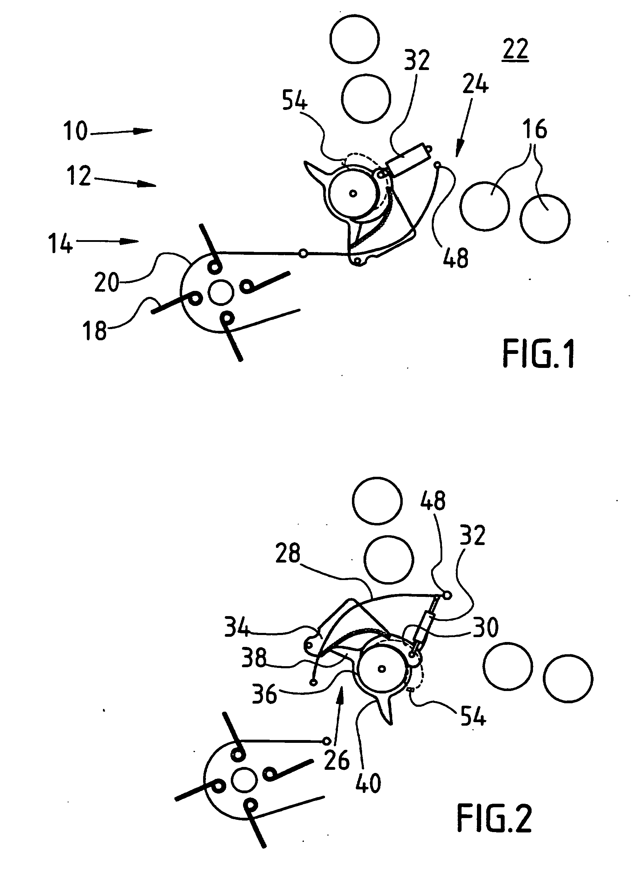

Figur 1 zeigt einen Abschnitt einer Erntebergungsmaschine 10 mit einer erfindungsgemäßen Fördervorrichtung 12.

Die Erntebergungsmaschine 10 ist in der Form einer Rundballenpresse mit einer größenunveränderlichen Ballenpreßkammer ausgebildet. Anstatt einer solchen Ausbildung könnte es sich auch um eine Rundballenpresse mit variabler Ballenpreßkammer, um eine Rechteckballenpresse, um einen Ladewagen oder dergleichen handeln. Die Erntebergungsmaschine 10 enthält neben der Fördervorrichtung 12 unter anderem einen Aufnehmer 14 und Preßelemente 16.

Der Aufnehmer 14 ist als eine sogenannte Pick-Up ausgebildet, die mittels umlaufender Zinken 18 Erntegut vom Boden abhebt und es auf Blechen 20 zu den Preßelementen 16 fördert.

Die Preßelemente 16 sind als Rollen dargestellt, können in einer anderen Ausführungsform aber auch als Riemen oder Stabketten ausgebildet sein, die über Rollen geführt werden. Die Preßelemente 16 liegen mit anderen nicht dargestellten Preßelementen 16 auf einem Kreisbogen und umgeben eine Preßkammer 22, in der zugeführtes Erntegut zu einem Ballen verdichtet wird. In ungefähr 7-Uhr-Stellung ist zwischen zwei Preßelementen 16 ein Einlaß 24 vorgesehen, in den die Fördervorrichtung 12 hineinragt. Die Lage des Einlasses 24 kann in Grenzen auch variiert werden.

Die Preßelemente 16, der Aufnehmer 14 und die Fördervorrichtung 12 sind auf einem nicht gezeigten Fahrgestell angeordnet, das sich über Räder auf dem Boden abstützt und mittels einer ebenfalls nicht gezeigten Deichsel an ein Zugfahrzeug angehängt werden kann. Hierzu werden keine Ausführungen gemacht, da dies für die Erfindung nicht im Detail erforderlich ist.

Die Fördervorrichtung 12 enthält gemäß allen Ausführungsbeispielen als wesentliche Elemente einen Rotor 26, eine Leitwand 28, Abstreifer 30 und eine Einstellvorrichtung 32. Als sekundäre und nicht zwingende Merkmale sind zudem Messer 34 vorgesehen.

Der Rotor 26 ist auf nicht gezeigte Weise angetrieben, und zwar derart, daß er das Erntegut von dem Aufnehmer 14 zu dem Einlaß 24 bewegt. Je nach seiner Anordnung verläuft die Drehrichtung im oder entgegen dem Uhrzeigerdrehsinn. Der Rotor 26 weist ein Rohr 36 und Mitnehmer 38 auf. Die Mitnehmer 38 sind radial auf das Rohr 36 aufgesetzt - vorzugsweise geschraubt oder geschweißt. Auf dem Umfang des Rotors 36 sind jeweils drei Mitnehmer 38 vorgesehen und auf der Länge des Rotors 36 sind eine Vielzahl von Sternen mit Mitnehmern 38 vorgesehen, z. B. fünf oder sechs. Die Mitnehmer 38 haben eine Förderkante 40 mit einer nachlaufenden Charakteristik und einer Länge, die grundsätzlich bis nahe an die Leitwand 28 heranreicht. Die Anzahl der Mitnehmer 38 und deren Verteilung kann den jeweiligen Umständen angepaßt werden.

Die Leitwand 28 wird regelmäßig von einem gebogenen steifen Blech oder einer Stahlwanne gebildet, die ausreichend stabil sind, dem Druck des Förderguts standzuhalten und es auf einer teilweise konzentrischen Bahn um den Rotor 26 zu führen. Die Leitwand 28 kann auf nicht gezeigte Weise mittels Stegen oder dergleichen verstärkt werden. In den gezeigten Ausführungsbeispielen ist die Leitwand 28 mit nicht gezeigten Schlitzen versehen, durch die sich die Messer 34 hindurch erstrecken können und von der Stellung der Leitwand 28 unbeeinflußt bleiben. Während die Funktion der Leitwand 28 in allen Ausführungsbeispielen die gleiche ist und während auch die Krümmung und Länge der Leitwand 28 im wesentlichen identisch sind, ist die Aufhängung der Leitwand 28 am stromaufwärts und am stromabwärts gelegenen Endbereich unterschiedlich ausgestaltet.

Gemäß den Ausführungsbeispielen der Figuren 1, 2, 3, 5, 6, 7, 9, 15, 18 und 19 ist das stromaufwärts liegende Ende der Leitwand 28 in einem ortsfesten Schwenklager 42 gehalten. Auf diese Weise kann die Leitwand 28 auf nachfolgend näher beschriebene Weise um dieses Schwenklager 42 quer zur Gutflußrichtung geschwenkt werden. Das Schwenklager 42 ist so gelegen, daß ein absatzfreier Übergang zwischen den Blechen 20 und der Leitwand 28 erfolgt, wenn es sich um eine unterschlächtige Förderung handelt. Im Falle einer oberschlächtigen Förderung - sh. z. B. Figur 2 - befindet sich das Schwenklager 42 etwa oberhalb des rückwärtigen, d. h. stromabwärts gelegenen Endes der Bleche 20. In diesem Fall schließt sich an die Bleche 20 eine starre nicht gezeigte Wand an, deren hauptsächliche Funktion darin besteht, ein Entfallen von Erntegut nach unten zu vermeiden.

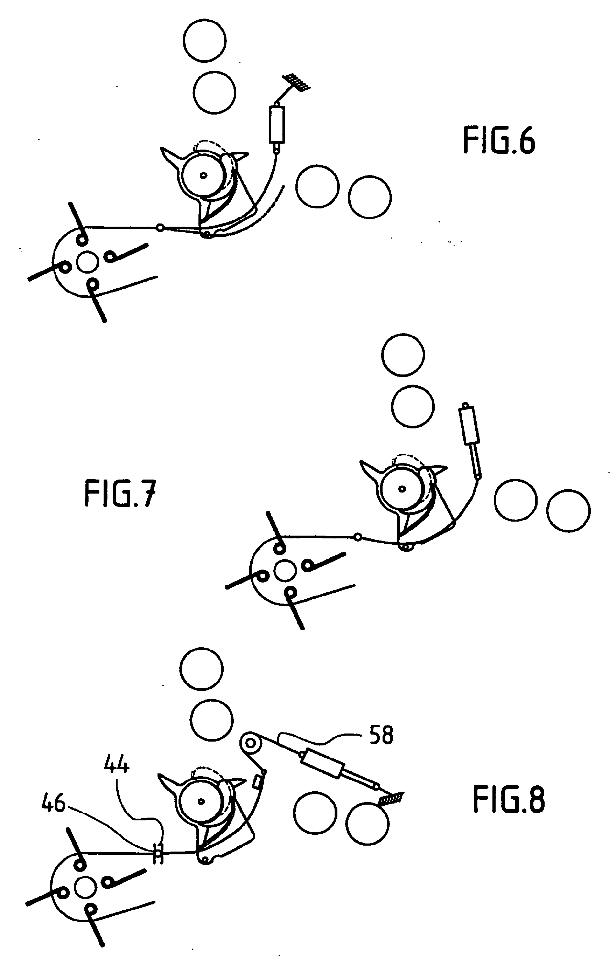

In den Ausführungen gemäß den Figuren 8 und 10 bis 13 ist anstelle eines ortsfesten Schwenklagers 42 ein vertikal bewegliches Gleitlager 44 vorgesehen, das in einer Gleitführung 46 quer zum Gutfluß bewegbar ist.

Der stromabwärts gelegene Endbereich der Leitwand 28 ist mit einem Lager 48 versehen, das gemäß den Ausführungen der Figuren 1, 2, 10, 11, 18 und 19 starr in nicht gezeigten Seitenwänden der Erntebergungsmaschine 10 gehalten ist. In den anderen Ausführungsbeispielen ist das Lager 48 verstellbar ausgebildet.

Die Verwendung des Gleitlagers 44 und des beweglichen Lagers 48 hat den Zweck, die Leitwand 28 im Bereich des Rotors 26 zu verstellen.

Die Abstreifer 30 sind pro Reihe von Mitnehmern 38 vorgesehen und dienen dazu, von den Mitnehmern 38 angefördertes Erntegut von dem Rotor 26 abzunehmen und in die Preßkammer 22 weiterzuleiten. Folglich ist bei einer Ausführung mit nur einem einzigen Mitnehmer 38 oder nur einem einzigen Stern von Mitnehmern 38 auch nur ein einziger Abstreifer 30 vorgesehen.

Der Mitnehmer 38 hat bei allen Ausführungsbeispielen dieselbe Form und Anordnung - was jedoch nicht zwingend ist. Die Form wird dadurch bestimmt, daß eine dem Rotor 26 bzw. dessen Rohr 36 zugelegene Kante 50 auf einem Teil eines Kreisbogens verläuft, während eine dem Rotor 26 abgelegene Abstreifkante 52 einer Evolvente bzw. Evolute folgt. Die Lage der Evolvente ist derart gewählt, daß sie an einem stromaufwärts gelegenen Ende nahezu in der Art einer Spitze und tangential von dem Rohr 36 ausgeht und mit einem maximalen Abstand zu dem Rohr 36 an einem stromabwärts gelegenen Ende ausläuft. Demzufolge nimmt der Abstand der Abstreifkante 52 zu dem Rohr 36 in der Gutflußrichtung ständig und kontinuierlich zu. Die beiden stromabwärts gelegenen Enden der Kante 50 und der Abstreifkante 52 sind bogenförmig miteinander verbunden. Der oder die Abstreifer 30 sind vorzugsweise demontierbar auf einem nicht gezeigten Träger befestigt, der sich in dem nicht Gut führenden Bereich des zwischen dem Aufnehmer 14 und dem Einlaß 24 bestehenden Förderkanals befindet und durch geeignete Öffnungen in den nicht gezeigten Seitenwänden der Erntebergungsmaschine 10 erstreckt oder bewegt wird. Gemäß Figur 1 und 2 sind Anschläge 54 vorgesehen, die die Endstellungen der Abstreifer 30 definieren. Diese Anschläge 54 sind für den Träger der Abstreifer 30 bestimmt und können auch einstellbar ausgebildet werden. Es ist auch denkbar, den Anschlägen 54 Sensoren zuzuordnen, die erkennen, ob sich der Träger und somit die Abstreifer 30 in einer ihrer Endstellung befinden oder nicht. Die Kreisform der inneren Kante 50 ist so gewählt, daß sie auf den Außenumfang des Rohrs 36 paßt, so daß sich die Abstreifer 30 auf dem Rohr 36 abstützen können, oder zumindest einen so kleinen Abstand zu diesem einhalten, daß sich kein Erntegut zwischen die Abstreifer 30 und das Rohr 36 einklemmen kann.

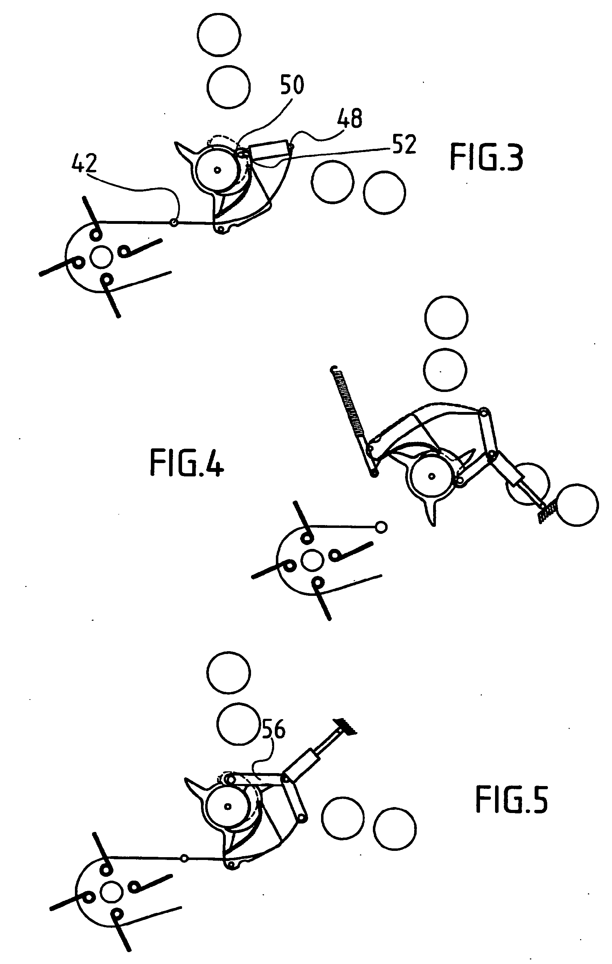

Die Einstellvorrichtung 32 ist fremdkraftbetätigbar, z. B. mittels Hydraulik oder Elektrik, wobei die Betätigung entweder durch eine manuelle Steuerung oder durch eine automatische Steuerung oder Regelung erfolgen kann. Diese Steuerung oder Regelung ist nicht dargestellt. Die Einstellvorrichtung 32 wirkt gemäß den Figuren 1, 2, 3, 6, 7, 14, 15, 16 und 18 direkt auf den Rotor 26, die Leitwand 28 oder den Abstreifer 30. Gemäß den Figuren 4, 5, 8 bis 13, 16, 17 und 19 sind zwischen der Einstellvorrichtung 32 und dem Rotor 26, der Leitwand 28 und/oder den Abstreifern 30 Lenker 56 oder Seile 58 vorgesehen. In allen Ausführungsformen ist die Einstellvorrichtung 32 einenends an einem Rahmen, Fahrgestell, Seitenwand oder dergleichen - jedenfalls außerhalb des Förderkanals vorgesehen, so daß sie den Gutfluß nicht behindert. Während die Ausführungsbeispiele von einer doppeltwirkenden Einstellvorrichtung 32 ausgehen, kann diese auch einfachwirkend ausgebildet sein und der weniger belastete Hub von einer Feder oder einem anderen Energiespeicher ausgeführt werden. Des weiteren kann - was nicht dargestellt ist - zwischen der Einstellvorrichtung 32 und dem Rotor 26, der Leitwand 28 und/oder dem Abstreifer 30 ein Energiespeicher als Dämpfungsglied vorgesehen werden, der Lastspitzen auffängt.

Die Lenker 56 stellen eine Verbindung zwischen der Einstellvorrichtung 32 und dem Rotor 26, der Leitwand 28 und/oder dem Abstreifer 30 her, wenn eine drückende Bewegung übertragen werden soll, während für eine ziehende Bewegung ein oder mehrere Lenker 56 oder ein oder mehrere Seile 58 verwendet werden.

Entsprechend den Figuren 1 und 2 greift die Einstellvorrichtung 32 unmittelbar an den Abstreifern 30 an, in den Figuren 6, 7 und 15 unmittelbar an der Leitwand 28 und zwar jeweils für eine oberschlächtige oder eine unterschlächtige Förderung. Bei der Ausführungsform nach Figur 3 greift ein Ende der Einstellvorrichtung 32 an dem Abstreifer 30 und das andere Ende an der Leitwand 28 an; die richtige Stellung der Einstellvorrichtung 32 wird dadurch erreicht, daß diese mittels einer nicht gezeigten Feder oder dergleichen Stellelement zwischen den Abstreifern 30 oder der Leitwand 28 oder der Einstellvorrichtung 32 und dem Rahmen der Erntebergungsmaschine 10 gehalten und positioniert wird.

Gemäß den Figuren 4 und 5 sind zwei Lenker 56 vorgesehen, die einenends gemeinsam an der Einstellvorrichtung 32 angreifen und anderenends an die Abstreifer 30 und an das Lager 48 der Leitwand 28 angeschlossen sind. Demnach bewirkt eine Verstellung der Einstellvorrichtung 32, daß sich die Abstreifer 30 und die Leitwand 28 im gleichen Sinne aus dem Förderkanal heraus oder in diesen hineinbewegen, mithin den Durchlaßquerschnitt vergrößern oder verkleinern.

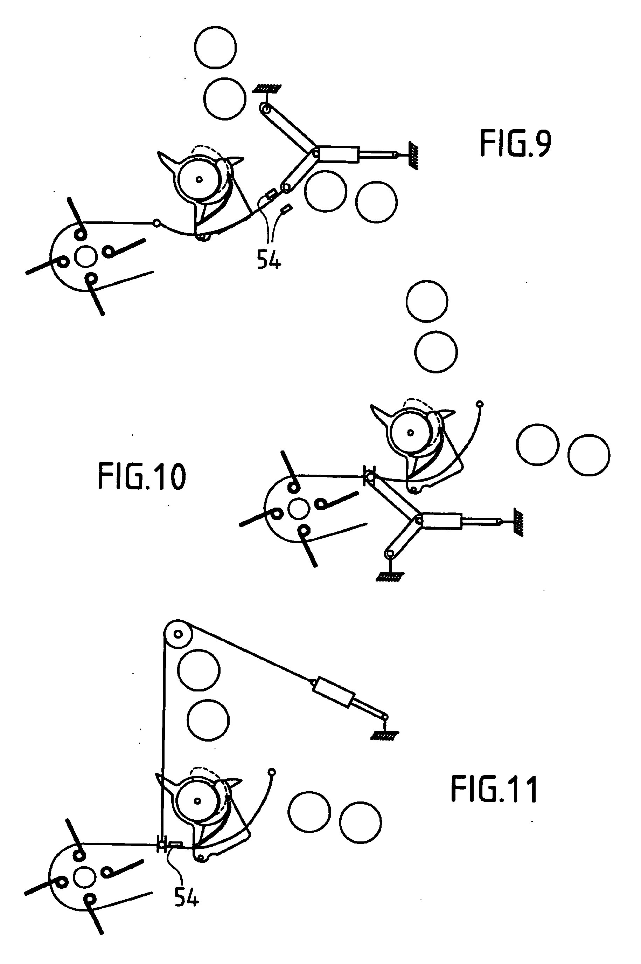

Figur 8 und 11 zeigen eine Ausführungsform, bei der zwischen dem Gleitlager 44 bzw. dem Lager 48 und der Einstellvorrichtung 32 ein Seil 58 vorgesehen ist, das auf seinem Weg umgelenkt wird und somit eine andere Lage der Einstellvorrichtung 32 erlaubt.

Figuren 9 und 10 zeigen ein scherenartiges Lenkersystem, bei dem ein Lenker 56 die Lage der Einstellvorrichtung 32 stabilisiert, während der andere Lenker 56 die Bewegung auf das Gleitlager 44 bzw. das Lager 48 überträgt. Auf diese Weise ist ebenfalls eine Umlenkung der Bewegungen und somit eine andere Anordnung der Einstellvorrichtungen 32 möglich.

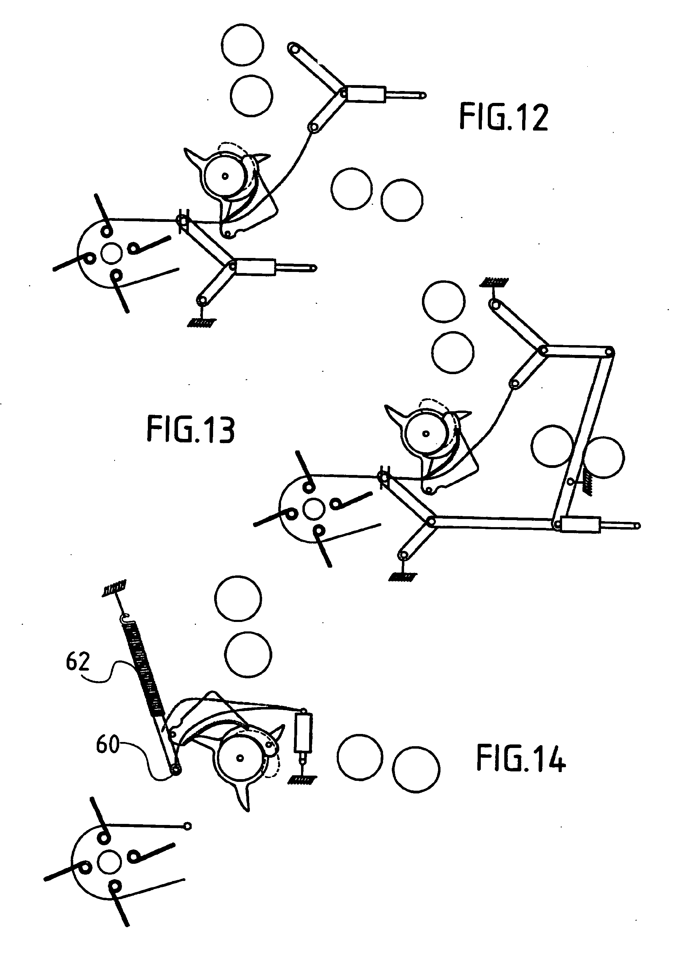

Gemäß den Figuren 12 und 13 wird sowohl die Lage des Gleitlagers 44 als auch die des Lagers 48 mittels eines scherenartigen Lenkersystems geändert, wobei laut Figur 102 zwei Einstellvorrichtungen 32 und laut Figur 13 eine einzige Einstellvorrichtung 32 vorgesehen ist, die über ein drittes scherenartiges Lenkersystem auf die beiden anderen Lenkersysteme wirkt.

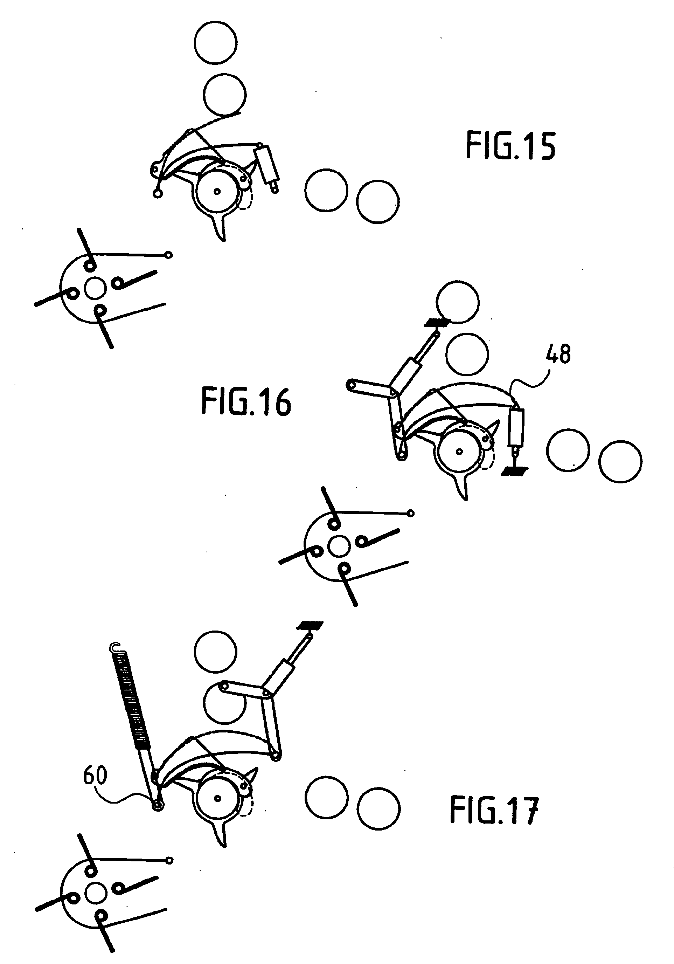

Aus den Figuren 14 und 17 geht eine Verstellung einer Leitwand 28 bei einer oberschlächtigen Förderung hervor, bei denen die Einstellvorrichtung 32 an dem Lager 48 angreift, während der stromaufwärts liegende Endbereich der Leitwand 28 mittels eines Lagers 60 an einem Energiespeicher 62 angreift. Dieser Energiespeicher 62 ist einenends an dem Rahmen oder den Seitenwänden der Erntebergungsmaschine 10 befestigt, als Druckspeicher oder Druckfeder ausgebildet und so geführt, daß er nicht ausknicken kann. Damit die Lage der Leitwand 28 nicht instabil wird, sind entsprechende Führungen und gegebenenfalls Anschläge 54 vorzusehen, was jedoch nicht gezeigt ist.

Im Fall der Ausführung nach Figur 16 erfolgt der Angriff einer ersten Einstellvorrichtung 32 an dem vorderen Lager 60 über ein scherenartiges Lenkersystem und an dem rückwärtigen Lager 48 direkt.

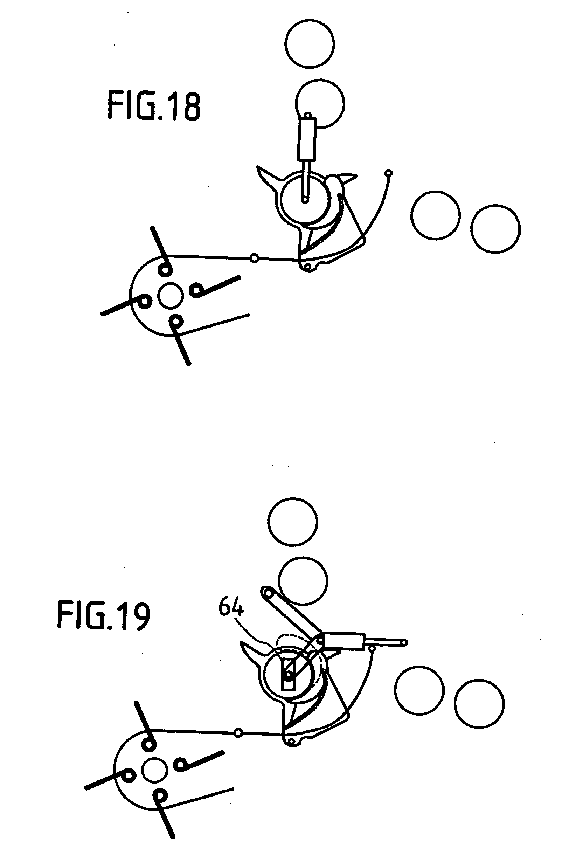

Die Figuren 18 und 19 zeigen eine Verstellung des Rotors 26, um den Durchlaßquerschnitt des Förderkanals zu ändern. Hierzu ist der Rotor 26 beispielsweise mit den Enden seiner Tragwelle in einer Gleitführung 64 vertikal gleitend aufgenommen. Die Verstellung erfolgt wiederum über eine Einstellvorrichtung 32 direkt (Fig. 18) oder mit einem scherenartigen Lenkersystem (Fig. 19). Eine nicht gezeigte Synchronisiereinheit stellt eine gleichmäßige Bewegung des Rotors 26 an seinen Endbereichen sicher, so daß dieser nicht in der Gleitführung 64 verkantet. In einer von diesem Ausführungsbeispiel abweichenden Vorrichtung kann der Rotor 26 auch bei starr angebrachten Abstreifern 30 und Leitwand 28 verstellt werden.

Wenn auch der Angriff der Einstellvorrichtung 32, des Lenkers 56 und/oder der Seile 58 an den Abstreifern 30 jeweils an den Abstreifern 30 selbst dargestellt ist, so geschieht dies lediglich zur vereinfachten Darstellung der Funktion. In der Wirklichkeit erfolgt der Angriff an dem Träger der Abstreifer 30.

Die Messer 34 sind entsprechend der Mitnehmer 38 angeordnet, d. h. unmittelbar seitlich davon, um einen ziehenden Schnitt mit den Mitnehmern 38 zu erzeugen. Die Messer 34 sind an sich von bekannter Bauart und werden auf herkömmliche Weise auf einem Träger befestigt und verstellbar gelagert. Die Messer 34 ragen durch die zuvor erwähnten Schlitze in der Leitwand 28 und ragen in den Bewegungskreis der Mitnehmern 38.

Das Gleitlager 44 kann als eine Stange, ein Zapfen oder eine Rolle ausgeführt werden und ragt an den seitliche Enden der Leitwand 28 über die Seitenwände der Erntebergungsmaschine 10 hinaus. Die Gleitführung 46 wird in der einfachsten Form von zwei beabstandeten Schienen oder einem U-Profil gebildet, in dem sich das jeweilige Gleitlager 44 bewegen kann. Gemäß Figur 11 ist oberhalb der Leitwand 28 ein Anschlag 54 vorgesehen, der verhindert, daß die Leitwand 28 in den Gutfluß hineinragt und zu Verstopfungen führt.

Nach alledem ergibt sich folgende Funktion.

Mittels einer manuellen oder automatischen Steuer- oder Regelvorrichtung wird ein Wert für die Größe des Durchlaßquerschnitts des Förderkanals erzeugt, wobei als Förderkanal der Raum zwischen den Seitenwänden der Erntebergungsmaschine 10, dem Rotor 26, der Leitwand 28 und dem oder den Abstreifern 30 gelten soll, d. h. dem Bereich, in dem sich das Erntegut maximal bewegen kann. Dieser Wert führt zu einer Anpassung des Durchlaßquerschnitts an die Gutmenge derart, daß stets eine bestimmte Dichte erreicht wird, die zu einem sicheren Förderverhalten führt.

Je nach der gewählten Ausführungsform findet eine Bewegung der Einstellvorrichtung 32 auf den Rotor 26, die Leitwand 28 und/oder die Abstreifer 30 statt. Bei einem Ausfahren der Einstellvorrichtung 32 findet in den meisten Ausführungsbeispielen - außer bei Figur 10, 17 und 19 - eine Vergrößerung des Durchlaßquerschnitts statt. Beispielsweise werden in Figur 1 oder 2 die Abstreifer 30 so auf und koaxial zu dem Rohr 36 geschwenkt, daß sie den Durchlaßquerschnitt vergrößern. Wird die Einstellvorrichtung 32 beispielsweise in den Figuren 4 bis 7 ausgefahren, bewegt sich die Leitwand 28 von dem Rotor 26 weg und der Durchlaßquerschnitt vergrößert sich. In den Fällen der Figuren 12 und 16 kommt es auf die Steuerung bzw. Regelung der jeweiligen Einstellvorrichtung 32 an, ob sich der Durchlaßquerschnitt am eingangsseitigen oder ausgangsseitigen Ende oder an beiden Enden ändert. Jedenfalls wird in allen Fällen erreicht, daß während der Förderung und insbesondere während eines Schneidbetriebs eine gleichmäßige Dichte des Ernteguts vorliegt, die für einen Betrieb weitgehendst ohne Lastspitzen sorgt.

## Patentansprüche

1. Fördervorrichtung (12) einer Erntebergungsmaschine (10) mit einem Rotor (26), wenigstens einem Abstreifer (30) und mit einem wenigstens eine Leitwand (28) enthaltenden Förderkanal, dessen Durchlaßquerschnitt im Bereich des Rotors (26) für den Betrieb mittels einer Einstellvorrichtung (32) veränderbar ist, **dadurch gekennzeichnet, daß** der Abstreifer (30) mittels der Einstellvorrichtung (32) zur Steuerung der durch den Förderkanal förderbaren Gutmenge verstellbar ist.

2. Fördervorrichtung nach Anspruch 1, **dadurch gekennzeichnet, daß** die Einstellvorrichtung (32) fremdkraftbetätigbar ist.

3. Fördervorrichtung nach Anspruch 1, **dadurch gekennzeichnet, daß** die Einstellvorrichtung (32) manuell betätigbar ist.

4. Fördervorrichtung nach Anspruch 1 oder 2, **dadurch gekennzeichnet, daß** eine Steuerung der Einstellvorrichtung (32) mittels einer manuellen oder sensorischen Signalgebereinheit erfolgt.

5. Fördervorrichtung nach einem oder mehreren der vorherigen Ansprüche, **dadurch gekennzeichnet, daß** eine Regelung der Einstellvorrichtung (32) mittels eines Sensors erfolgt, der die zu fördernde Erntegutmenge ermittelt.

6. Fördervorrichtung nach einem oder mehreren der vorherigen Ansprüche, **gekennzeichnet durch** einen Speicher und einen Rechner, wobei der Speicher Werte zum Errechnen des Durchlaßquerschnitts enthält und der Rechner eine Betätigung der Einstellvorrichtung (32) in Abhängigkeit von den gespeicherten Daten bewirkt.

7. Fördervorrichtung nach einem oder mehreren der vorherigen Ansprüche, **dadurch gekennzeichnet, daß** auf der verstellbaren Leitwand (28) ein oder mehrere Messer (34) befestigt sind.

8. Fördervorrichtung nach einem oder mehreren der vorherigen Ansprüche 1 bis 6, **dadurch gekennzeichnet, daß** ein oder mehrere Messer (34) durch die verstellbare Leitwand (28) hindurchragen.

9. Fördervorrichtung nach einem oder mehreren der vorherigen Ansprüche, **dadurch gekennzeichnet, daß** der Einstellvorrichtung (32) ein Kraftspeicher zugeordnet ist.

10. Fördervorrichtung nach einem oder mehreren der vorherigen Ansprüche, **dadurch gekennzeichnet, daß** der Abstreifer (30) mittels der Einstellvorrichtung (32), insbesondere mittels eines Hydraulikmotors, insbesondere stufenlos, verstellbar ist.

11. Fördervorrichtung nach einem oder mehreren der vorherigen Ansprüche, **dadurch gekennzeichnet, daß** der Abstreifer (30) eine Abstreifkante (52) aufweist, deren Abstand zu der Leitwand (28) sich über ihre Länge verändert und deren Stellung gegenüber einer Drehachse des Rotors (26) verstellbar ausgebildet ist.

12. Fördervorrichtung nach Anspruch 11, **dadurch gekennzeichnet, daß** die Abstreifkante (52) mit Bezug auf die Drehachse des Rotors (26) einer Evolvente folgt.

13. Fördervorrichtung nach Anspruch 11 oder 12, **dadurch gekennzeichnet, daß** der Abstreifer (30) auf der Außenumfangsfläche des Rotors (26) oder mit geringem Abstand zu dieser gleitet.

14. Fördervorrichtung nach einem oder mehreren der vorherigen Ansprüche, **dadurch gekennzeichnet, daß** die Leitwand (28) an einem stromaufwärts des Rotors (26) gelegenen Endbereich um eine ortsfeste Achse schwenkbar gelagert und in einem stromabwärts des Rotors (26) gelegenen Endbereich quer zum Gutstrom beweglich ist.

15. Fördervorrichtung nach einem oder mehreren der vorherigen Ansprüche, **dadurch gekennzeichnet, daß** der stromaufwärts des Rotors (26) gelegene Endbereich der Leitwand (28) quer zu der Dicke des Gutflusses gesteuert verstellbar ist.

16. Fördervorrichtung nach Anspruch 15, **dadurch gekennzeichnet, daß** der stromaufwärts des Rotors (26) gelegene Endbereich der Leitwand (28) mit einem Gleitlager (44) versehen ist, das in einer Gleitführung (46) aufgenommen ist.

17. Fördervorrichtung nach einem oder mehreren der vorherigen Ansprüche, **dadurch gekennzeichnet, daß** die Leitwand (28) oberhalb des Rotors (26) für eine oberschlächtige Förderung vorgesehen ist.

18. Fördervorrichtung nach einem oder mehreren der vorherigen Ansprüche, **dadurch gekennzeichnet, daß** die Leitwand (28) unterhalb des Rotors (26) für eine unterschlächtige Förderung vorgesehen ist.

19. Fördervorrichtung nach einem oder mehreren der vorherigen Ansprüche, **dadurch gekennzeichnet, daß** der Rotor (26) quer zu der Gutstromrichtung verstellbar ist.

20. Fördervorrichtung nach einem oder mehreren der vorherigen Ansprüche, **dadurch gekennzeichnet, daß** die Einstellvorrichtung (32) sowohl auf den Abstreifer (30) als auch auf die Leitwand (28) oder auf den Abstreifer (30) und den Rotor (26) oder auf den Rotor (26) und die Leitwand (28) wirkt.

21. Fördervorrichtung nach einem oder mehreren der vorherigen Ansprüche, **dadurch gekennzeichnet, daß** der Weg der Abstreifer (30) und/oder der Leitwand (28) durch starre oder verstellbare Anschläge (54) begrenzbar ist.

22. Fördervorrichtung nach einem oder mehreren der vorherigen Ansprüche, **dadurch gekennzeichnet, daß** die Leitwand (28) an beiden Endbereichen mit Bezug auf den Rotor (26) verstellbar ist.

23. Fördervorrichtung nach einem oder mehreren der vorherigen Ansprüche, **dadurch gekennzeichnet, daß** der Abstreifer (30) und die Leitwand (28) gemeinsam in eine den Durchlaßquerschnitt vergrößernde oder in eine den Durchlaßquerschnitt verkleinernde Stellung bringbar sind.

24. Fördervorrichtung nach einem oder mehreren der vorherigen Ansprüche, **dadurch gekennzeichnet, daß** die Einstellvorrichtung (32) gegen die Kraft eines Energiespeichers betätigbar ist.

25. Fördervorrichtung nach einem oder mehreren der vorherigen Ansprüche, **dadurch gekennzeichnet, daß** die Einstellvorrichtung (32) auf einen und ein Kraftspeicher auf einen anderen aus Rotor (26), Leitwand (28) oder Abstreifer (30) wirkt.

26. Ballenpresse, insbesondere Rundballenpresse, mit einer Fördervorrichtung (12) nach einem oder mehreren der vorherigen Ansprüche.

## Claims

1. Conveying device (12) of a harvest recovery machine (10), comprising a rotor (26), at least one stripper (30), and comprising a conveying duct containing at least one guide wall (28) and the flow area of which, for operation, is variable in the region of the rotor (26) by means of an adjusting device (32), **characterized in that** the stripper (30) is adjustable by means of the adjusting device (32) in order to control the material quantity conveyable through the conveying duct.

2. Conveying device according to Claim 1, **characterized in that** the adjusting device (32) is power operable.

3. Conveying device according to Claim 1, **characterized in that** the adjusting device (32) is manually operable.

4. Conveying device according to Claim 1 or 2, **characterized in that** the adjusting device (32) is controlled by means of a manual or sensory signal transmitter unit.

5. Conveying device according to one or more of the previous claims, **characterized in that** the adjusting device (32) is regulated by means of a sensor which determines the crop quantity which is to be conveyed.

6. Conveying device according to one or more of the previous claims, **characterized by** a memory and a computer, the memory containing values for calculating the flow area and the computer bringing about an actuation of the adjusting device (32) in dependence on the stored data.

7. Conveying device according to one or more of the previous claims, **characterized in that** one or more blades (34) are fastened on the adjustable guide wall (28).

8. Conveying device according to one or more of the previous claims 1 to 6, **characterized in that** one or more blades (34) protrude through the adjustable guide wall (28).

9. Conveying device according to one or more of the previous claims, **characterized in that** a power store is assigned to the adjusting device (32).

10. Conveying device according to one or more of the previous claims, **characterized in that** the stripper (30) is adjustable, in particular continuously adjustable, by means of the adjusting device (32), in particular by means of a hydraulic motor.

11. Conveying device according to one or more of the previous claims, **characterized in that** the stripper (30) has a stripping edge (52), whose distance to the guide wall (28) changes over its length and whose setting is configured so as to be adjustable relative to a rotational axis of the rotor (26).

12. Conveying device according to Claim 11, **characterized in that** the stripping edge (52), with respect to the rotational axis of the rotor (26), follows an involute curve.

13. Conveying device according to Claim 11 or 12, **characterized in that** the stripper (30) slides on the outer peripheral surface of the rotor (26) or at a short distance thereto.

14. Conveying device according to one or more of the previous claims, **characterized in that** the guide wall (28) is mounted pivotably about a fixed axis on an end region situated upstream of the rotor (26) and is movable transversely to the material flow in an end region situated downstream of the rotor (26).

15. Conveying device according to one or more of the previous claims, **characterized in that** the end region of the guide wall (28) which is situated upstream of the rotor (26) is adjustable transversely to the thickness of the material flow.

16. Conveying device according to Claim 15, **characterized in that** the end region of the guide wall (28) which is situated upstream of the rotor (26) is provided with a plain bearing (44) accommodated in a slideway (46).

17. Conveying device according to one or more of the previous claims, **characterized in that** the guide wall (28) is provided above the rotor (26) for an overshot conveyance.

18. Conveying device according to one or more of the previous claims, **characterized in that** the guide wall (28) is provided below the rotor (26) for an undershot conveyance.

19. Conveying device according to one or more of the previous claims, **characterized in that** the rotor (26) is adjustable transversely to the material flow direction.

20. Conveying device according to one or more of the previous claims, **characterized in that** the adjusting device (32) acts both upon the stripper (30) and upon the guide wall (28), or upon the stripper (30) and the rotor (26), or upon the rotor (26) and the guide wall (28).

21. Conveying device according to one or more of the previous claims, **characterized in that** the travel of the strippers (30) and/or of the guide wall (28) can be limited by rigid or adjustable stops (54).

22. Conveying device according to one or more of the previous claims, **characterized in that** the guide wall (28), at both end regions, is adjustable with respect to the rotor (26).

23. Conveying device according to one or more of the previous claims, **characterized in that** the stripper (30) and the guide wall (28) can be brought jointly into a setting which enlarges the flow area or into a setting which reduces the flow area.

24. Conveying device according to one or more of the previous claims, **characterized in that** the adjusting device (32) can be actuated counter to the force of an energy store.

25. Conveying device according to one or more of the previous claims, **characterized in that** the adjusting device (32) acts upon one and a power store acts upon another of rotor (26), guide wall (28) or stripper (30).

26. Baling press, in particular a round baler, comprising a conveying device (12) according to one or more of the previous claims.

## Revendications

1. Dispositif d'alimentation (12) d'une machine de récolte (10) comprenant un rotor (26), au moins un racleur (30) et un canal de transport contenant au moins une paroi directrice (28), dont la dimension de passage dans la zone du rotor (26) pour l'exploitation est modifiable au moyen d'un dispositif d'ajustage (32), **caractérisé en ce que** le racleur (30) est ajustable au moyen du dispositif d'ajustage (32) pour la commande de la quantité de marchandise pouvant être transportée par le canal de transport.

2. Dispositif d'alimentation selon la revendication 1, **caractérisé en ce que** le dispositif d'ajustage (32) peut être actionné par une force extérieure.

3. Dispositif d'alimentation selon la revendication 1, **caractérisé en ce que** le dispositif d'ajustage (32) peut être actionné manuellement.

4. Dispositif d'alimentation selon la revendication 1 ou 2, **caractérisé en ce qu'**une commande du dispositif d'ajustage (32) s'effectue au moyen d'une unité génératrice de signal manuelle ou sensorielle.

5. Dispositif d'alimentation selon l'une quelconque ou plusieurs des revendications précédentes, **caractérisé en ce qu'**un réglage du dispositif d'ajustage (32) s'effectue au moyen d'un capteur qui détermine la quantité récoltée à transporter.

6. Dispositif d'alimentation selon l'une quelconque ou plusieurs des revendications précédentes, **caractérisé par** une mémoire et un ordinateur, la mémoire contenant des valeurs pour le calcul de la section de passage et l'ordinateur entraînant un actionnement du dispositif d'ajustage (32) en fonction des données stockées.

7. Dispositif d'alimentation selon l'une quelconque ou plusieurs des revendications précédentes, **caractérisé en ce qu'**un ou plusieurs couteaux (34) sont fixés sur la paroi directrice (28) réglable.

8. Dispositif d'alimentation selon l'une quelconque ou plusieurs des revendications précédentes 1 à 6, **caractérisé en ce qu'**un ou plusieurs couteaux (34) dépassent à travers la paroi directrice (28) ajustable.

9. Dispositif d'alimentation selon l'une quelconque ou plusieurs des revendications précédentes, **caractérisé en ce qu'**un accumulateur de force est attribué au dispositif d'ajustage (32).

10. Dispositif d'alimentation selon l'une quelconque ou plusieurs des revendications précédentes, **caractérisé en ce que** le racleur (30) peut être ajusté, en particulier de façon progressive, au moyen du dispositif d'ajustage (32), en particulier au moyen d'un moteur hydraulique.

11. Dispositif d'alimentation selon l'une quelconque ou plusieurs des revendications précédentes, **caractérisé en ce que** le racleur (30) présente une arête de raclage (52), dont la distance à la paroi directrice (28) varie sur sa longueur et dont la position par rapport à un axe de rotation du rotor (26) est conçue ajustable.

12. Dispositif d'alimentation selon la revendication 11, **caractérisé en ce que** l'arête racleuse (52) suit une développante par rapport à l'axe de rotation du rotor (26).

13. Dispositif d'alimentation selon la revendication 11 ou 12, **caractérisé en ce que** le racleur (30) glisse sur la surface périphérique extérieure du rotor (26) ou avec une faible distance de celle-ci.

14. Dispositif d'alimentation selon l'une quelconque ou plusieurs des revendications précédentes, **caractérisé en ce que** la paroi directrice (28) est fixée sur une zone d'extrémité située en amont du rotor (26) de façon à pouvoir basculer autour d'un axe fixe et est mobile dans une zone d'extrémité située en aval du rotor (26) transversalement au flux de produit.

15. Dispositif d'alimentation selon l'une quelconque ou plusieurs des revendications précédentes, **caractérisé en ce que** la zone d'extrémité, située en amont du rotor (26), de la paroi directrice (28) est ajustable de façon contrôlée transversalement à l'épaisseur du flux de produit.

16. Dispositif d'alimentation selon la revendication 15, **caractérisé en ce que** la zone d'extrémité, située en amont du rotor (26), de la paroi directrice (28) est dotée d'un palier à glissement (44) qui est réceptionné dans un guidage à glissement (46).

17. Dispositif d'alimentation selon l'une quelconque ou plusieurs des revendications précédentes, **caractérisé en ce que** la paroi directrice (28) est prévue au-dessus du rotor (26) pour un entraînement imprimé par le dessus.

18. Dispositif d'alimentation selon l'une quelconque ou plusieurs des revendications précédentes, **caractérisé en ce que** la paroi directrice (28) est prévue au-dessous du rotor (26) pour un entraînement imprimé par le dessous.

19. Dispositif d'alimentation selon l'une quelconque ou plusieurs des revendications précédentes, **caractérisé en ce que** le rotor (26) est ajustable transversalement au sens du flux de produit.

20. Dispositif d'alimentation selon l'une quelconque ou plusieurs des revendications précédentes, **caractérisé en ce que** le dispositif d'ajustage (32) agit aussi bien sur le racleur (30) que sur la paroi directrice (28) ou sur le racleur (30) et le rotor (26) ou sur le rotor (26) et la paroi directrice (28).

21. Dispositif d'alimentation selon l'une quelconque ou plusieurs des revendications précédentes, **caractérisé en ce que** la course des racleurs (30) et/ou de la paroi directrice (28) peut être limitée par des butées (54) fixes ou ajustables.

22. Dispositif d'alimentation selon l'une quelconque ou plusieurs des revendications précédentes, **caractérisé en ce que** la paroi directrice (28) est réglable sur les deux zones d'extrémité par rapport au rotor (26).

23. Dispositif d'alimentation selon l'une quelconque ou plusieurs des revendications précédentes, **caractérisé en ce que** le racleur (30) et la paroi directrice (28) peuvent être amenés ensemble dans une position qui augmente la section de passage ou dans une position qui réduit la section de passage.

24. Dispositif d'alimentation selon l'une quelconque ou plusieurs des revendications précédentes, **caractérisé en ce que** le dispositif d'ajustage (32) peut être actionné contre la force d'un accumulateur d'énergie.

25. Dispositif d'alimentation selon l'une quelconque ou plusieurs des revendications précédentes, **caractérisé en ce que** le dispositif d'ajustage (32) agit sur un élément et un accumulateur de force agit sur un autre élément constitué du rotor (26), de la paroi directrice (28) ou du racleur (30).

26. Presse à balles, en particulier presse à balles rondes, comprenant un dispositif d'alimentation (12) selon l'une quelconque ou plusieurs des revendications précédentes.
